# EUROPEAN PATENT SPECIFICATION

(11) **EP 0 772 553 B1**
(45) Date of publication and mention of the grant of the patent: **25.04.2001**
(21) Application number: 95928677.4
(22) Date of filing: 24.07.1995
(51) Int. Cl.: B65D 41/00

(54) **PEELABLE FILM STRUCTURE**
ABZIEHBARE FILMSTRUKTUR
STRUCTURE DE FILM PELABLE

(30) Priority: 29.07.1994 GB 9415397
(43) Date of publication of application: 14.05.1997
(73) Proprietor: MOBIL PLASTICS EUROPE, INC., Dover, DE 76466-3889 (US)
(72) Inventor: AMBROISE, Benoit, F-55150 Damvillers (FR)
(74) Representative: Samuels, Lucy Alice
(86) International application number: US9509355
(87) International publication number: WO9604178

(56) References cited:
- EP-A- 0 588 223
- US-A- 4 663 219
- US-A- 4 755 402
- US-A- 4 801 486
- US-A- 4 983 447
- US-A- 5 116 651

## Description

This invention relates to a peelable film structure. More particularly, the invention relates to a peelable film structure that can be used in packaging applications requiring easy opening or as a lid in plastic containers.

It is known to heat seal a film to the top of a container in such a manner that the film acts as a lid for the container. The container to which the lid film is heat. sealed can be any type of heat sealable material, typically polyethylene or polypropylene or polypropylene homopolymers or copolymers.

The lid film typically comprises a multilayer film which includes a thin layer of polyethylene or a lacquer The purpose of the thin layer of polyethylene or lacquer is to enable the lid film to be heat sealed to the container.

The heat seal is often very difficult to break, which makes it hard to open the container without tearing the lid. One solution to this problem has been to apply special adhesives onto the lid film. Another solution involves the use of multilayer peelable films, in which the peeling occurs within the body of the multilayer film.

US 4,663,219 A and US 4,983,447 A disclose packaging films comprising opaque multi-layer polyolefin films. US 5,116,651 A discloses a sealed packaging vessel having a lid comprising a multi-layer polyolefin film.

EP 588,223 A discloses in its examples a film having a sealing layer of thickness 10 µm and comprising 55% of a polymer of propylene and 5% total ethylene and but-1-ene and 45% polyethylene of density 0.930 g/cm³. According to claim 1 of the publication the maximum amount of ethylene polymer in the sealing layer is 50 wt.%.

It is an object of the present invention to provide a film structure which overcomes this problem.

According to one aspect of the present invention, there is provided a peelable film structure comprising:
(a) a core layer comprising an olefin polymer; and
(b) a heat sealable layer on the core layer comprising a blend of LDPE (low density polyethylene) and an ethylene-propylene-butylene terpolymer.

The heat sealable layer contains from 50 to 70 wt.% LDPE and the heat sealable layer has a thickness of 0.75 or 1.5 µm.

The film structure can be heat sealed, by layer (b), to a plastic container to form the lid of the container, or to itself to form a package. When used with a plastic container, the film structure can be readily peeled from the container in order to open it.

The preferred ethylene-propylene-butylene terpolymers contain 1 to 10 wt.%, more preferably 2 to 6 wt.%, ethylene; 80 to 97 wt.%, more preferably 88 to 95 wt.%, propylene; and 1 to 20 wt.%, more preferably 2 to 15 wt.%, butene-1.

The heat sealable layer contains 50 to 70 wt.% LDPE, preferably 50 to 60 wt.% LDPE, and more preferably 50 wt.% LDPE.

Preferably the core layer comprises polypropylene. One alternative material for the core layer is HDPE. The core layer may comprise voids. More specifically, the core layer may be cavitated. Suitable procedures for cavitating the core layer are disclosed in EP-A-0083495. A preferred cavitating agent is polybutylene terephthalate, especially as spherical particles.

Desirably the film structure is biaxially oriented.

The film structure may include a skin layer disposed on the opposite side of the core layer to the heat sealable layer. It is possible for the skin layer to be heat sealable too. If desired, the skin layer may have the same composition as the heat sealable layer. Preferably the skin layer is an olefin polymer.

When the skin layer is used, its surface may be corona treated, flame treated, or treated by chemicals. This surface treatment is most beneficial if the skin layer is to be printed on or laminated to another film.

The heat sealable layer of the film structure of this invention may be coated with a heat-sealable coating, such as, for example, acrylic or polyvinylidine chloride (PVdC). Heat sealing the film (i.e., acrylic to acrylic or PVdC to PVdC) provides seals which are peelable.

Further, the heat sealable layer of the present film structure may be coated with a lacquer which acts normally as an adhesive between surfaces, e.g., a plastic container and its lid. Due to the cohesive failure of the heat sealable layer of the film structure, any resulting seals, such as, for example, between a plastic (e.g., PVC or polystyrene) container and the present film structure are peelable.

According to another aspect of the invention, there is provided a container comprising a plastics body and a film structure as described above, wherein the film structure is heat sealed to the body in order to provide a lid for the container.

Preferably the container has an outer heat sealable layer to which the film structure is heat sealed. The outer layer is preferably an olefin polymer, more preferably polypropylene or polyethylene.

It is preferred that the material of the outer layer of the container is the same as the material blended with the LDPE in the film structure.

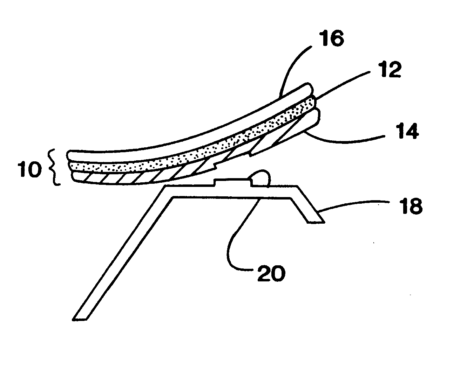

Reference is now made to the accompanying drawing which shows a film structure according to the invention being peeled from a container.

In the drawing a film structure generally designated 10 comprises core layer 12, a heat sealable layer 14, and a skin layer 16. The core layer 12 comprises 100% isotactic polypropylene; the heat sealable layer 14 comprises a blend of 50 wt.% ethylene-propylene-butylene terpolymer with 50 wt.% LDPE; and the skin layer 16 has the same composition as the heat sealable layer 14. The film structure 10 has been biaxially oriented.

The film structure 10 is shown being peeled from a container 18 to which it had been heat sealed by heat sealable layer 14. The container 18 has a heat sealable outer layer (not shown specifically in the drawing) to which the heat sealable layer 14 has been heat sealed.

The film structure 10 can readily be peeled from the container 18, as shown in the drawing. This may leave parts (e.g., part 20 shown in the drawing) of the heat sealable layer 14 on the container 18. After opening, the film exhibits stress whitening in the sealed area, which can provide evidence of tampering. This feature is particularly useful when the film is used with medical or food packaging.

### Examples

### Comparative Example 1

Film A was prepared by coextruding a heat sealable layer of 50% ethylene-propylene-butylene terpolymer with 50% high density polyethylene (HDPE), having 0.75 micron thickness, and a polypropylene support. The total film thickness was 25 microns.

### Comparative Example 2

Film B was prepared by coextruding a heat sealable layer of 50% ethylene-propylene-butylene terpolymer with 50% high density polyethylene (HDPE), having 1.5 microns thickness, and a polypropylene support. The total film thickness was 25 microns.

### Comparative Example 3

Film C was prepared by coextruding a heat sealable layer of 50% ethylene-propylene-butylene terpolymer with 50% linear low density polyethylene (LLDPE), having 0.75 micron thickness, and a polypropylene support. The total film thickness was 25 microns.

### Comparative Example 4

Film D was prepared by coextruding a heat sealable layer of 50% ethylene-propylene-butylene terpolymer with 50% linear low density polyethylene (LLDPE), having 1.5 microns thickness, and a polypropylene support. The total film thickness was 25 microns.

### Example 1

Film E was prepared by coextruding a heat sealable layer of 50% ethylene-propylene-butylene terpolymer with 50% LDPE, having 0.75 micron thickness, and a polypropylene support. The total film thickness was 25 microns.

### Example 2

Film F was prepared by coextruding a heat sealable layer of 50% ethylene-propylene-butylene terpolymer with 50% LDPE, having 1.5 microns thickness, and a polypropylene support. The total film thickness was 25 microns.

### Example 3

The films A to F are all heat sealable; films E and F are examples of film structures according to the invention. The following tests were carried out to demonstrate that the films E and F, which can be used in the invention, have superior peelability to the films A to D.

Each film A to F was heat sealed onto a rigid homopolymer sheet of 240 microns thickness. The sealing was carried out on an Otto Brugger (at 5 bars for 0.5 second) at various temperatures. The seal strengths were then measured. The results are set out in Table 1.

**Table 1**

| Seal Strength/g/25 cm | | | | | | |
|---|---|---|---|---|---|---|
| Film | 120°C | 130°C | 140°C | 150°C | 160°C | 170°C |
| A | 0 | 0 | 125 | 165 | 450 | 900* |
| B | 0 | 100 | 230 | 150 | 510 | 900* |
| C | 0 | 225 | 220 | 465 | 525 | 800* |
| D | 0 | 115 | 285 | 350 | 610* | 800* |
| E | 0 | 60 | 300 | 255 | 350 | 350 |
| F | 0 | 250 | 350 | 400 | 345 | 350 |

| | | | | | | |
|---|---|---|---|---|---|---|
| * tearing observed | | | | | | |

These results show that the films E and F possess lower seal strengths than the other films, particularly at high temperatures. The seal strengths attainable with films E and F are sufficient to provide a good heat seal, but at all temperatures the films E and F were peelable without tearing.

The results also show that films E and F produced seals having nearly constant peel strength over an extended heat seal temperature range when heat sealed onto a polypropylene sheet. This is advantageous over other film structure that demonstrate only a narrow temperature range where the seals do not tear.

### Example 4

The films E and F were heat sealed onto rigid polyethylene sheets of LDPE or MDPE, and the same tests as in Example 3 were carried out. The results are shown in Table 2.

**Table 2**

| Seal Strength/g/25 cm | | | | | |
|---|---|---|---|---|---|
| Film | 130°C | 140°C | 150°C | 160°C | 170°C |
| Film E: | | | | | |
| LDPE | 500 | 1250 | 1315 | >2000 | >2000 |
| MDPE | 0 | 0 | 360 | 435 | 410 |

| Film F: | | | | | |
|---|---|---|---|---|---|
| LDPE | 385 | 1100 | 1525 | >2000 | >2000 |
| MDPE | 0 | 0 | 255 | 380 | 430 |

No tearing was observed in any of the results of Example 4. The results in Table 2 show that films E and F provide peelable seals when they are heat sealed onto a polyethylene sheet and can provide seals with very high seal strengths without tearing, depending on the type of polyethylene.

## Claims

1. A peelable film structure (10) comprising
(a) a core layer (12) comprising an olefin polymer; and
(b) a heat sealable layer (14) on the core layer comprising a blend of LDPE with an ethylene-propylene-butylene terpolymer, characterised in that the heat sealable layer contains 50 to 70 wt.% LDPE and the heat sealable layer has thickness of 0.75 *µ*m or 1.5*µ*m.

2. The film structure according to claim 1 wherein the heat sealable layer contains 50 to 60 wt.% LDPE.

3. The film structure according to claim 2, wherein the heat sealable layer contains 50 wt.% LDPE.

4. The film structure according to any preceding claim wherein the core layer is polypropylene.

5. The film structure according to any preceding claim wherein the core layer comprises voids.

6. The film structure according to any preceding claim which is biaxially oriented.

7. The film structure according to any preceding claim further comprising a skin layer (16) disposed on the opposite side of the core layer to the heat sealable layer.

8. The film structure according to claim 7 wherein the skin layer has the same composition as the heat sealable layer.

9. The film structure according to claim 7, wherein the skin layer is an olefin polymer.

10. The film structure according to claim 1 further comprising a heat sealable coating over the heat sealable layer.

11. The film structure according to claim 1 further comprising an adhesive lacquer coating over the heat sealable layer.

12. The use of a film according to any preceding claim as a lid for a container (18) wherein the heat sealable layer is peelably sealed to the container.

13. A container comprising a plastics body and a film structure according to any of claims 1 to 11 wherein the film structure is peelably heat sealed to the body in order to provide a lid for the container.

14. The container according to claim 13, wherein the body has an outer heat sealable layer to which the film structure is heat sealed.

15. The container according to claim 14, wherein the outer layer is an olefin polymer.

16. The container according to claim 15, wherein the outer layer is a polyethylene.

17. The container according to claim 16, wherein the outer layer comprises the same material as the incompatible material in the heat sealable layer.

## Patentansprüche

1. Abziehbare Filmstruktur (10), umfassend
(a) eine Innenlage (12), die ein Olefinpolymer umfaßt und
(b) eine Heißversiegelungsschicht (14) auf der Innenlage, die ein Gemisch aus LDPE mit einem Ethylen-Propylen-Butylen-Terpolymer umfaßt, dadurch gekennzeichnet, daß die Heißversiegelungsschicht 50 bis 70 Gewichtsprozent LDPE enthält und die Heißversiegelungsschicht eine Dicke von 0,75 µm oder 1,5 µm hat.

2. Filmstruktur gemäß Anspruch 1, dadurch gekennzeichnet, daß die Heißversiegelungsschicht 50 bis 60 Gewichtsprozent LDPE enthält.

3. Filmstruktur gemäß Anspruch 2, dadurch gekennzeichnet, daß die Heißversiegelungsschicht 50 Gewichtsprozent LDPE enthält.

4. Filmstruktur gemäß jedem vorstehenden Anspruch, dadurch gekennzeichnet, daß die Innenlage Polypropylen ist.

5. Filmstruktur gemäß jedem vorstehenden Anspruch, dadurch gekennzeichnet, daß die Innenlage Hohlräume umfaßt.

6. Filmstruktur gemäß jedem vorstehenden Anspruch, dadurch gekennzeichnet, daß sie biaxial orientiert ist.

7. Filmstruktur gemäß jedem vorstehenden Anspruch, dadurch gekennzeichnet, daß sie weiterhin eine Außenlage (16) umfaßt, die auf der der Heißversiegelungsschicht gegenüberliegenden Seite der Innenlage angeordnet ist.

8. Filmstruktur gemäß Anspruch 7, dadurch gekennzeichnet, daß die Außenlage dieselbe Zusammensetzung wie die Heißversiegelungsschicht hat.

9. Filmstruktur gemäß Anspruch 7, dadurch gekennzeichnet, daß die Außenlage ein Olefinpolymer ist.

10. Filmstruktur gemäß Anspruch 1, dadurch gekennzeichnet, daß sie weiterhin eine Heißversiegelungsbeschichtung über der Heißversiegelungsschicht umfaßt.

11. Filmstruktur gemäß Anspruch 1, dadurch gekennzeichnet, daß sie weiterhin eine Haftlackbeschichtung über der Heißversiegelungsschicht umfaßt.

12. Verwendung eines Filmes gemäß einem vorstehenden Anspruch als Deckel für einen Behälter (18), dadurch gekennzeichnet, daß die Heißversiegelungsschicht den Behälter ablösbar verschließt.

13. Behälter, umfassend einen Kunststoffkörper und eine Filmstruktur gemäß einem der Ansprüche 1 bis 11, dadurch gekennzeichnet, daß die Filmstruktur den Körper ablösbar heißversiegelt, um einen Deckel für den Behälter zur Verfügung zu stellen.

14. Behälter gemäß Anspruch 13, dadurch gekennzeichnet, daß der Körper eine äußere Heißversiegelungsschicht aufweist, auf der die Filmstruktur heißversiegelt ist.

15. Behälter gemäß Anspruch 14, dadurch gekennzeichnet, daß die äußere Schicht ein Olefinpolymer ist.

16. Behälter gemäß Anspruch 15, dadurch gekennzeichnet, daß die äußere Schicht ein Polyethylen ist.

17. Behälter gemäß Anspruch 16, dadurch gekennzeichnet, daß die äußere Schicht dasselbe Material wie das inkompatible Material in der Heißversiegelungsschicht umfaßt.

## Revendications

1. Une structure de film arrachable (10) comprenant :
(a) une couche centrale (12) comprenant un polymère d'oléfine ; et
(b) une couche thermosoudable (14) sur la couche centrale comprenant un mélange de LDPE et d'un terpolymère éthylène-propylène-butylène,
caractérisée en ce que la couche thermosoudable contient de 50 à 70 % en poids de LDPE et la couche thermosoudable présente une épaisseur de 0,75 ou de 1,5 µm.

2. La structure de film selon la revendication 1, dans laquelle la couche thermosoudable contient 50 à 60 % en poids de LDPE.

3. La structure de film selon la revendication 2, dans laquelle la couche thermosoudable contient 50 % en poids de LDPE.

4. La structure de film selon l'une quelconque des revendications précédentes, dans laquelle la couche centrale est en polypropylène.

5. La structure de film selon l'une quelconque des revendications précédentes, dans laquelle la couche centrale comprend des lacunes.

6. La structure de film selon l'une quelconque des revendications précédentes, qui est orientée biaxialement.

7. La structure de film selon l'une quelconque des revendications précédentes, comprenant en outre une couche extérieure (16) disposée sur la face de la couche centrale opposée à la couche thermosoudable.

8. La structure de film selon la revendication 7, dans laquelle la couche extérieure a la même composition que la couche thermosoudable.

9. La structure de film selon la revendication 7, dans laquelle la couche extérieure est un polymère d'oléfine.

10. La structure de film selon la revendication 1, comprenant en outre un revêtement thermosoudable sur la couche thermosoudable.

11. La structure de film selon la revendication 1, comprenant en outre un revêtement de laque adhésive sur la couche thermosoudable.

12. Utilisation d'un film selon l'une quelconque des revendications précédentes en tant que couvercle d'un conteneur (18) dans lequel la couche thermosoudable est soudée de façon à être arrachable sur le conteneur.

13. Un conteneur comprenant un corps en matière plastique et une structure de film selon l'une quelconque des revendications 1 à 11, dans lequel la structure de film est thermosoudée de manière à être arrachable sur le corps, de manière à constituer un couvercle de conteneur.

14. Le conteneur selon la revendication 13, dans lequel le corps comporte une couche extérieure thermosoudable sur laquelle on thermosoude la structure de film.

15. Le conteneur selon la revendication 14, dans lequel la couche extérieure est en polymère d'oléfine.

16. Le conteneur selon la revendication 15, dans lequel la couche extérieure est un polyéthylène .

17. Le conteneur selon la revendication 16, dans lequel la couche extérieure comprend la même matière que la matière incompatible dans la couche thermo-soudable.
